# Europäisches Patentamt
## European Patent Office
## Office européen des brevets

(11) Publication number: **0 120 531**
**B1**

(12) **EUROPEAN PATENT SPECIFICATION**

(45) Date of publication of patent specification: **07.01.88**

(51) Int. Cl.⁴: **A 01 D 43/08, A 01 D 73/00**

(21) Application number: **84200364.2**

(22) Date of filing: **14.03.84**

(54) **Skid for agricultural machines.**

(30) Priority: **17.03.83 GB 8307442**

(43) Date of publication of application:
**03.10.84 Bulletin 84/40**

(45) Publication of the grant of the patent:
**07.01.88 Bulletin 88/01**

(84) Designated Contracting States:
**DE FR GB**

(56) References cited:
**GB-A- 948 547**
**US-A-3 925 971**

(73) Proprietor: **NEW HOLLAND N.V.**
**Leon Claeysstraat 3a**
**B-8210 Zedelgem (BE)**

(72) Inventor: **Degraeve, Frans**
**Fazantenlaan 30**
**B-8210 Zedelgem (BE)**
Inventor: **Mortier, Frans H.**
**Buurtstraat 12B**
**B-9990 Maldegem (BE)**

(74) Representative: **Vandenbroucke, Alberic T.J.**
**et al**
**SPERRY NEW HOLLAND DIVISION OF SPERRY**
**N.V. Leon Claeysstraat, 3A**
**B-8210 Zedelgem (BE)**

Courier Press, Leamington Spa, England.

## Description

This invention relates to agricultural machines and more particularly to such machines having components which need to be supported for movement generally in contact with the ground.

A number of agricultural machines such as combine harvesters and forage harvesters, for example, are fitted with headers which are supported for movement in contact with the ground, usually being mounted for flotation so as to be able to follow the ground contour. A common support for a header is a skid which, in the operative position, contacts the ground and follows the contour of the latter, thus raising and lowering the header as appropriate so as to maintain the header at a substantially constant working height above the ground. One or more skids may be employed for a given header.

The or each skid is fixed relative to the header or any other component being supported and this gives rise to a problem in that when the header or other component is raised to an inoperative, transport position (which is always an essential facility), the or each skid is likely to be disposed at a height less than the desired minimum which is typically (10 inches) 25 centimetres. Alternatively the header has to be raised an extra amount which adversely affects the working relationship between the header and other components, which relationship is often critical, whereby this alternative is often unacceptable.

Following GB.948.547 and US.3.925.971, agricultural machines having a pick-up have already been provided with skids which are movable between an extended position relative to the pick-up when the latter is in the lowered operative position relative to the ground and a retracted position relative to the pick-up when said pick-up is in a raised transport position relative to the ground.

These skids have their ground-engageable surfaces positioned generally below the pick-up but are pivotally mounted on the base unit at a position generally rearwardly of the pivotal mounting of the pick-up on the base unit. These skids further also coupled in one way or another to the pick-up in a manner so as to retract relative thereto when the pick-up is raised from its operative to its inoperative position. However, in these arrangements, the relative position of the skids and the pick-up varies continuously as the pick-up floatingly moves over ground unevenesses which is unacceptable.

It is therefore an object of the present invention to overcome this disadvantage. More specifically, it is an object of the present invention to provide retractable skids for a header, pick-up or the like of an agricultural machine which are movable between extended and retracted portions when said header, pick-up or the like is moved from its lowered operative position to its raised inoperative position and which assume fixed positions relative to the header, pick-up or the like when the latter floatingly follows the ground contour.

According to the invention an agricultural machine is provided comprising:
— a base unit;
— a component mounted on the base unit for movement relative thereto between a raised transport position and a lowered operative position;
— at least one ground-engageable skid which is movable between retracted and extended positions relative to the component and which is provided with a first bracket for operative connection to a second bracket on the component; and
— arm means operatively coupling the skid to the base unit for automatically retracting said skid relative to the component on the raising of said component so that a desired transport position is reached;
and which is characterized in that:
— the first and second brackets comprise at least one first, and at least one second elongate slot; the first and second slots generally diverging relative to each other;
— the or each first bracket is coupled to an associated second bracket by a pin passing through both slots; the arrangement being such that, when the skid is in its normal and extended operative position, said pin engages end portions of both slots with said end portions being oriented generally perpendicularly to the direction of the load on the pin by the skid engaging the ground surface so that said pin together with said end portions effectively form locking means for automatically locking the skid in said operative position relative to the component; and
— the operative coupling of the skid to the base unit by the arm means is realized in part by a coupling of the arm means to the pin whereby the arm means is operable, when the component is raised, to urge the pin from the end portions along the slots so as to provide an automatic unlocking and an automatic retraction of the skid relative to the component.

Preferably the at least one ground-engageable skid is pivotally attached at its forward end to the component and the first and second brackets are provided generally in the vicinity of the opposite end of said skid. The first and second slots are of similar shape with the second slot being oriented as a mirror image and at an angle with respect to the first slot and with the end portions overlying each other when the skid is in the normal and extended operative position.

Preferably, the slots are two-limbed and generally of figure seven configuration with the longer limbs thereof being oriented at said angle relative to each other and the shorter limbs thereof being oriented so as to overlie each other when the skid is in the normal operative position and with the pin engaging the ends of the shorter limbs of the respective slots in said normal operating position automatically to lock the skid in that position; the shorter limbs and the pin thus forming said locking means. The arm means are pivotally attached at their other end to the base unit through a lost motion connection, whereby small generally vertical movements of the component resulting from the following of the ground contour are accommodated without the or each skid being moved relative to the component but, when said component is raised, the arm means are pulled thereby to move the associated pin along said slots to retract the or each skid relative to said component.

A forage harvester embodying the present invention will now be described in greater detail, by way of example, with reference to the accompanying drawings, in which:

Figure 1 is a schematic side view of the machine with the pick-up in the lowered, operative position.

Figure 2 is an enlarged view of a portion of Figure 1,

Figure 3 is a view similar to Figure 2 but showing the pick-up in the raised, transport position,

Figure 4 is a plan view of a portion of Figure 1, and

Figure 5 is a sectional view of a component of Figure 1.

The forage harvester is of the precision chop type and is generally of conventional construction, whereby it will only be described briefly. The machine comprises a base unit or chassis 1 fitted with a pair of ground-engaging wheels 2, and is of the pull type, whereby a drawbar 3 and a drive shaft 4 (for connection to the power-take-off shaft of a tractor) are provided.

A header 5 for the machine, comprising a pick-up unit, is mounted via arms 8 on the base unit 1 for pivotal movement about a pivot shaft 6.

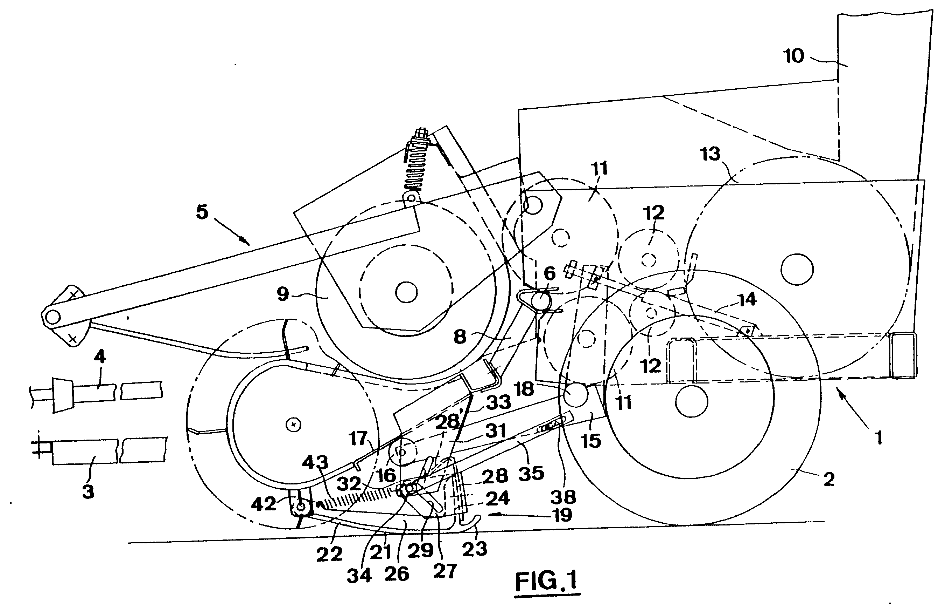

The header 5 also comprises an auger 9 mounted for pivotal movement with the pick-up unit, the auger being operable to feed crop material received from the pick-up unit to a forward pair of feed rolls 11 which in turn feeds the crop material to a rear pair of feed rolls 12 from which the crop material is delivered to a cutterhead 13 having a conventional delivery spout 10 which is only partly shown in Figure 1.

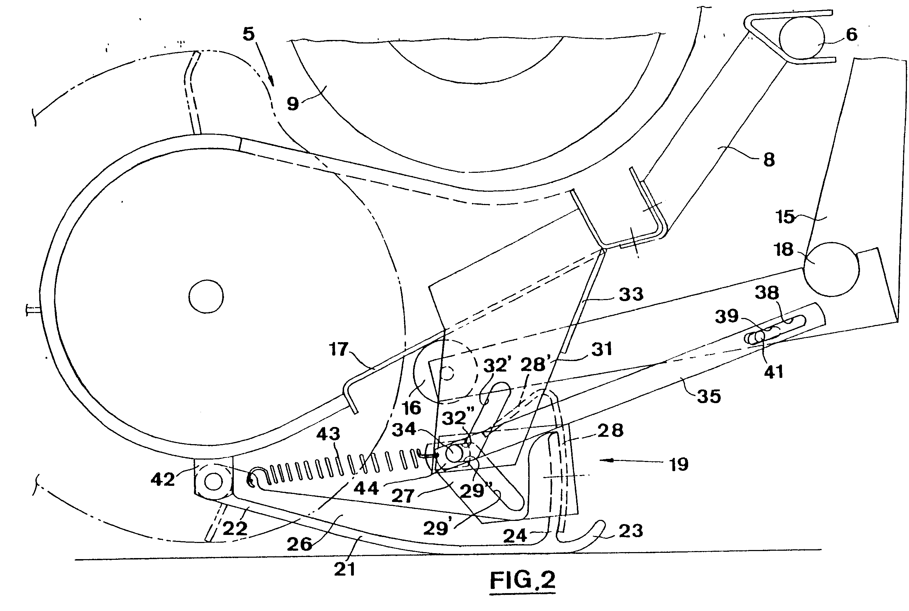

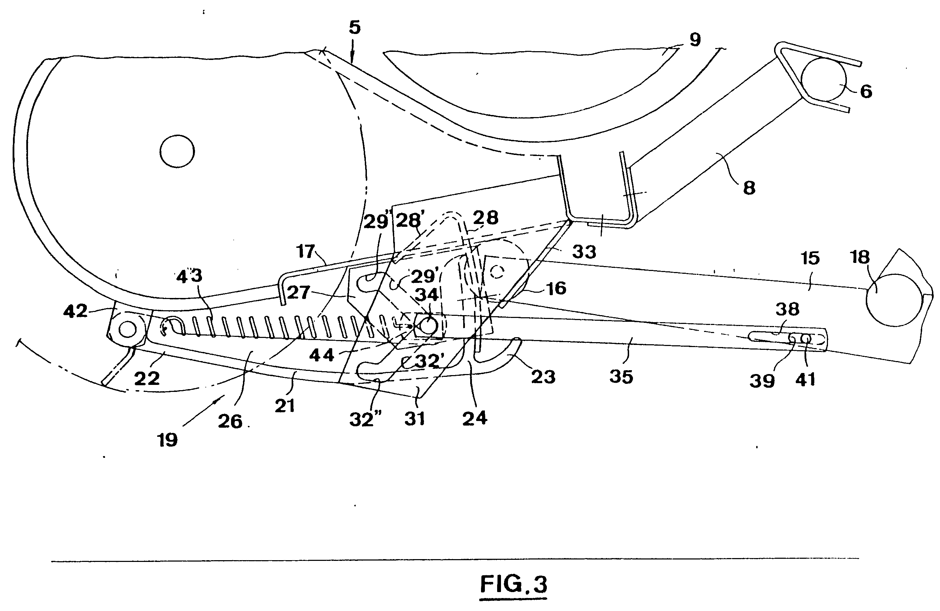

The header 5 is pivotally mounted on the base unit 1 so as to be movable to a raised, transport position (illustrated in Figure 3) in which the pick-up is clear of the ground. This raising and lowering is effected by an actuator 14 acting between the base unit 1 and one end of a ball-crank lever 15, the other end of which carries a roller 16 in engagement with the underside of a floor 17 of the header 5. Thus when the actuator 14 is retracted, the bell-crank lever 15 is pivoted clockwise about its pivot 18, whereby the end carrying the roller 16 is raised, carrying with it the header 5. Extension of the actuator 14 effects lowering of the header 5 to the operative position of Figures 1 and 2. It will be noted that the actuator 14 is coupled to the bell-crank lever 15 through a lost motion connection, enabling flotation of the header 5, when in the operative position, without effecting any retraction or extension of the plunger of the actuator 14. As is conventional, spring means (not shown) may be provided between the chassis 1 and the bell-crank lever 15 to assist in the flotation of the header 5 over the ground contour.

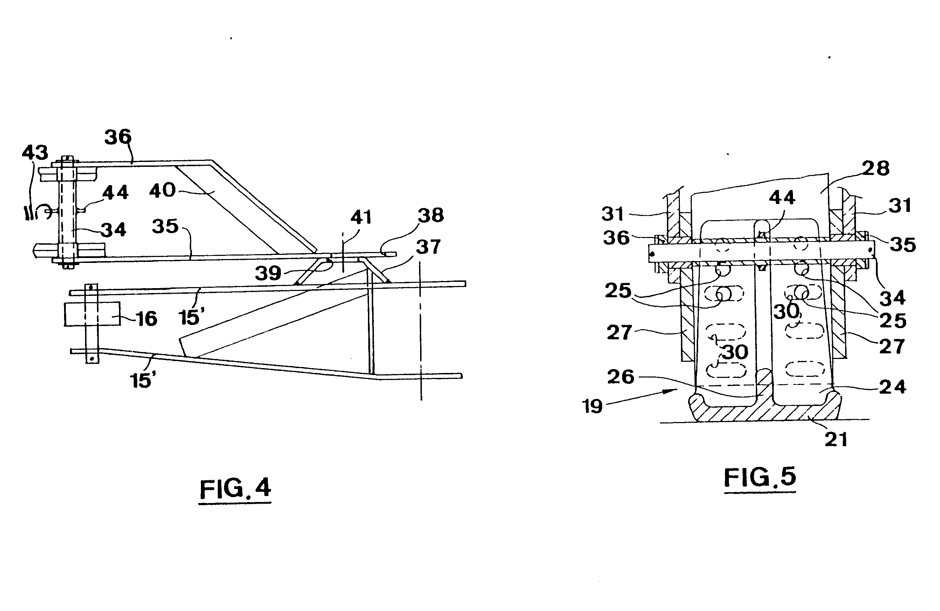

In accordance with the present invention, the header 5 is fitted with a pair of retractable skids 19, one mounted towards each end thereof, to support the latter for movement at a substantially constant working height relative to the ground during operation of the machine. Each skid 19 comprises a cast shoe, the sole 21 of which is generally flat over the portion normally in contact with the ground during operation, and is formed with an upturned toe 22 and heel 23 so that they cannot dig into the ground when the shoe is in contact therewith. At the point of upturn of the heel 23 there is provided an integral transverse web 24 extending upwardly from the sole 21 and provided with a plurality of pairs of apertures 25 (Figure 5). A central reinforcing web 26, also integral with the sole 21, is provided and this extends from the transverse web 25 to the toe 22. The sides of the sole 21 are upturned along a major portion of the latter.

Each skid 19 carries a mounting bracket comprising two spaced, generally parallel side plates 27 interconnected at one end by a transverse plate 28. Each side plate 27 is formed with a two-limbed slot 29 generally resembling a figure seven and comprising a long limb 29' and a shorter limb 29", the former being disposed generally vertical and the latter generally horizontal. The transverse plate 28 is formed with a plurality of pairs of elongated apertures 30, each pair being alignable with a selected pair of apertures 25 in the web 24, whereby these two components can be adjustably bolted together to set the desired working height of the header 5. The transverse plate 28 is extended beyond the upper edges of the side plates 27 and is turned over to provide a downwardly and forwardly extending portion 28'.

The plates 27 are received between a pair of spaced, generally parallel plates 31 extending downwardly from the floor of the header 5, each plate 31 being formed with a two limbed slot 32 of the same shape as the slot 29 in the adjacent plate 27 but oriented as the mirror image of the latter. The two plates 31 are braced by a transverse plate 33, these components forming a mounting bracket for the associated skid 19.

Each skid is attached to the associated mounting bracket by a pivot pin 34 extending from outside one of the pair of plates 31 through the slot 32 therein, through the aligned slots 29 of the plates 27 and out through the slot 32 in the other of the pair of plates 31. Arms 35, 36 are pivotally retained on respective ends of the pin 34 by split pins, the arm 35 being straight and extending rearwardly to a mounting bracket 37 provided on the lower limb of the bellcrank lever 15 which, as seen in Figure 4, is formed from two spaced components 15' between which the roller 16 is mounted. The arm 36 first extends parallel to the arm 35 and is then cranked towards the latter and attached thereto short of the rear end of the arm 35. The cranked portion of the arm 36 is reinforced by a fillet 40. The end of the arm 35 extending rearwardly beyond the arm 36 is formed with a slot 38 which receives a bolt 41 inserted through an aperture 39 in the mounting bracket 37. The slot 38 provides a lost motion connection for the arms 35, 36 to the bracket 37 for a reason to be described. The toe 22 of each skid 19 is pivotally attached to a bracket 42 on the header 5, and a tension spring 43 acts between the forward end of the web 26 and a bracket 44 carried by the pivot pin 34.

It will be noted that in the lowered, operative position of the header 5 (Figures 1 and 2) the pivot pin 34 is in engagement with the outer ends of the shorter limbs 29" and 32" of the slots 29 and 32. In this position, the respective shorter limbs 29", 32" of the slots 29 and 32 extend generally parallel to each other and generally tangentially to the forces resulting from the header 5 being supported at least partially on the ground, via the skids 19. Thereby the skids 19 are effectively "locked" in the operative position. It will also be noted that in this position of the header 5, the respective longer limbs 29', 32' of the slots 29, 30 are disposed at an angle with respect to each other. It will also be noted that the bolt 41 attaching each skid 19 to the associated bracket 37 is disposed intermediate the ends of the slot 38, although towards the forward end thereof, when the header 5 is in the operative position. As the forage harvester moves across a field to pick up and chop crop material, the skids 19 follow the contour of the ground and if any rise is encountered, the skids will ride up it and lift the header accordingly about the pivot shaft 6 through the agencies of the pivot pins 34 and the toe pivots. If any drop in ground level is encountered, the skids 19 will follow the same and allow header 5 to pivot downwardly about the pivot shaft 6, whereby the working height of the header is maintained substantially constant, having first been set by appropriate selection of the apparatus 25 and 31 in bolting the skids to the respective plates 28. This pivotal movement of the header 5 in following the ground contour is accommodated by the lost motion connections of the arms 35, 36 to the brackets 37 afforded by the slots 38, on the one hand, and of the actuator 14 to the bell-crank lever 15, on the other hand.

When the forage harvester is to be transported without being operative, the header 5 is raised to the transport position of Figure 3 by retracting the actuator 14 as already described. This results in the header being pivoted upwardly about the pivot shaft 6. This movement pulls the arms 35 and 36 generally forwardly of the machine first without any consequential movement until the bolts 41 engage the rear ends of the slots 38 in the arms 35 at which point the pivot pins 34 are then pulled rearwardly and as a result, first travel along the shorter limbs 29", 32" of the slots 29, 32 to unlock the skids from the operative position, and then ride up the longer limbs 29' and 32' until the outer ends of the latter are engaged. In this manner, and as the longer limbs 29', 32' of the slots 39, 32 are disposed at an angle relative to each other, the plates 27 are raised relative to the plates 31 and hence the skids 19 are retracted or raised relative to the header 5. Thus the skids 19 are raised to substantially the same ground clearance height as the header 5 (typically 10 inches/25 centimetres), whereby no problems arise during transport such as the fouling of the ground or objects thereon by the skids which is often a problem with non-retractable skids which have been employed to date, unless arrangements have been made to lift the header 5 still further to give the necessary skid clearance. As already explained, this extra raising on the header 5 can adversely affect the working relationship of the auger 9 and the feed rolls 11 which is critical for efficient operation of the machine.

On retraction of the skids 19, as described, the tension springs 43 are extended and when the header 5 is lowered on extension of the actuator 14, the springs 43 serve to ensure that the skids are returned to their operative positions by contracting and pulling on the pivot pins 34 to urge the same back down the limbs 29', 32' and into the "locking" limbs 29", 32" of the slots 29 and 32. Thus skid retraction, lowering and locking is achieved automatically on raising and lowering the header 5, respectively.

It will be seen that the present invention provides retractable skids to overcome the problem with known skids of inadequate ground clearance in the transport position. In the described embodiment, retraction of the skids is achieved in a simple but effective manner which does not involve any significant increase in manufacturing costs. It is not necessary for automatic retraction and lowering of the skids to be effected on raising and lowering the pick-up unit but this is a convenient and generally desirable arrangement. It will be appreciated that the invention is applicable to any agricultural machine employing skids and is not limited to forage harvesters.

**Claims**

1. An agricultural machine comprising:
— a base unit (1);
— a component (5) mounted on the base unit (1) for movement relative thereto between a raised transport position and a lowered operative position;
— at least one ground-engageable skid (19) which is movable between retracted and extended positions relative to the component (5) and which is provided with a first bracket (27) for operative connection to a second bracket (31) on the component (5); and
— arm means (35, 36) operatively coupling the skid (19) to the base unit (1) for automatically retracting said skid (19) relative to the component (5) on the raising of said component (5) so that a desired transport position is reached; characterized in that:
— the first and second brackets (27, 31) comprise at least one first and at least one second elongate slot (29, 32); the first and second slots (29, 32) generally diverging relative to each other;

— the or each first bracket (27) is coupled to an associated second bracket (31) by a pin (34) passing through both slots (29, 32); the arrangement being such that, when the skid (19) is in its normal and extended operative position, said pin (34) engages end portions (29″, 32″) of both slots (29, 32) with said end portions (29″, 32″) being oriented generally perpendicularly to the direction of the load on the pin (34) by the skid (19) engaging the ground surface so that said pin (34) together with said end portions (29″, 32″) effectively form locking means for automatically locking the skid (19) in said operative position relative to the component (5); and

— the operative coupling of the skid (19) to the base unit (1) by the arm means (35, 36) is realized in part by a coupling of the arm means (35, 36) at one end to the pin (34) whereby the arm means (35, 36) is operable, when the component (5) is raised, to urge the pin (34) from the end portions (29″, 32″) along the slots (29, 32) so as to provide an automatic unlocking and an automatic retraction of the skid (19) relative to the component (5).

2. A machine according to claim 1, characterized in that the at least one ground-engageable skid (19) is pivotally attached at its forward end to the component (5) and the first and second brackets (27, 31) are provided generally in the vicinity of the opposite end of said skid (19).

3. A machine according to claim 2, characterized in that the first and second slots (29, 32) are of similar shape with the second slot (32) being oriented as a mirror image and at an angle with respect to the first slot (29) and with the end portions (29″, 32″) overlying each other when the skid (19) is in the normal and extended operative position.

4. A machine according to claim 3, characterized in that the slots (29, 32) are two-limbed and generally of figure seven configuration with the longer limbs (29′, 32′) thereof being oriented at said angle relative to each other and the shorter limbs (29″, 32″) thereof being oriented so as to overlie each other when the skid (19) is in the normal operative position and with the pin (34) engaging the ends of the shorter limbs (29″, 32″) of the respective slots (29, 32) in said normal operating position automatically to lock the skid (19) in that position; the shorter limbs (29″, 32″) and the pin (34) thus forming said locking means.

5. A machine according to claim 3 or 4, characterized in that the or each first bracket (27) comprises two spaced, generally parallel plates each formed with said first slot (29), and in that the or each second bracket (31) also comprises two spaced, generally parallel plates arranged to receive therebetween the plates of a first mounting bracket (27) and each formed with said second slot (32).

6. A machine according to any of the preceding claims, characterized in that the arm means (35, 36) are pivotally attached at their other end to the base unit (1) through a lost motion connection (38, 41), whereby small generally vertical movements of the component (5) resulting from the following of the ground contour are accommodated without the or each skid (19) being moved relative to the component (5) but, when said component (5) is raised to its transport position, the arm means (35, 36) are pulled thereby to move the associated pin (34) along said first and second slots (29, 32) to retract the or each skid (19) relative to said component (5).

7. A machine according to claim 6, characterized in that the or each arm means (35, 36) comprises two arms connected to respective ends of the associated pin (34), with one arm (36) being cranked towards, and secured to, the other arm (35).

8. A machine according to any of the preceding claims, characterized in that the or each skid (19) is provided with a tension spring (43) acting upon the associated pin (34) and being operable to ensure return movement of said pin (34) along the first and second slots (29, 32) when said component (5) is lowered so as to re-position the skid (19) in the operative condition.

9. A machine according to claims 5 or any of the claims 6 to 8 when appended to claim 5, characterized in that the or each first bracket (27) comprises a further plate (28) interconnecting the two spaced plates and provided with a plurality of apertures (30), and in that the or each skid (19) is formed with an upstanding web (24) also provided with a plurality of apertures (25); the or each skid (19) being adjustably attached to the associated first bracket (27) by bolts passing through selected apertures (25, 30) in the further plate (28) and the web (24), the apertures (25, 30) being chosen to set the required working height of the component (5).

10. A machine according to claim 9, characterized in that the or each further plate (28) extends upwardly beyond the upper edges of the associated parallel plates (27) and is turned so as to provide a forwardly and downwardly extending portion (28′).

## Patentansprüche

1. Eine landwirtschaftliche Maschine
— mit einer Basiseinheit (1),
— mit einem Bauteil (5), das an der Basiseinheit (1) gegenüber dieser für eine Bewegung zwischen einer angehobenen Transportposition und einer abgesenkten Betriebsstellung beweglich befestigt ist,
— mit zumindestens einer mit dem Boden in Eingriff bringbaren Kufe (19), die zwischen zurückgezogenen und ausgefahrenen Positionen gegenüber dem Bauteil (5) beweglich ist und die mit einem ersten Haltearm (27) für eine betriebsmäßige Verbindung mit einem zweiten Haltearm (31) an dem Bauteil (5) versehen ist, und
— mit Armteilen (35, 36), die die Kufe (19) betriebsmäßig mit der Basiseinheit (1) verbinden, um die Kufe (19) gegenüber dem Bauteil (5) automatisch beim Anheben des Bauteils (5) zurückzuziehen, so daß eine gewünschte Transportposition erreicht wird, dadurch gekennzeichnet

— daß die ersten und zweiten Haltearme (27, 31) zumindestens einen ersten und zumindestens einen zweiten langgestreckten Schlitz (29, 32) aufweisen, daß die ersten und zweiten Schlitze (29, 23) allgemein relativ zueinander divergieren,

— daß der oder jeder erste Haltearm (27) mit einem zugehörigen zweiten Haltearm (31) über einen Bolzen (34) verbunden ist, der durch beide Schlitze (29, 32) hindurchläuft, wobei die Anordnung derart ausgebildet ist, daß, wenn sich die Kufe (19) in ihrer normalen und ausgefahrenen Betriebsstellung befindet, der Bolzen (34) mit Endteilen (29″, 32″) beider Schlitze (29, 32) in Eingriff kommt, wobei diese Endteile (29″, 32″) beide allgemein senkrecht zur Richtung der Last sind, die von der mit der Bodenfläche in Eingriff stehenden Kufe (19) auf den Bolzen (34) ausgeübt wird, so daß der Bolzen (34) zusammen mit den Endteilen (29″, 32″) im Ergebnis Verriegelungseinrichtungen bildet, um die Kufe (19) automatisch in der Betriebsstellung gegenüber dem Bauteil (5) zu verriegeln, und

— daß die betriebsmäßige Verbindung der Kufe (19) mit der Basiseinheit (1) durch die Armteile (35, 36) teilweise durch eine Verbindung der Armteile (35, 36) mit einem Ende des Bolzens (34) ausgeführt ist, so daß die Armteile (35, 36) bei Anheben des Bauteils (5) bewirken, daß der Bolzen (34) von den Endteilen (29″, 32″) fort entlang der Schlitze (29, 32) gedrückt wird, so daß sich eine automatische Entriegelung und ein automatisches Zurückziehen der Kufe (19) gegenüber dem Bauteil (5) ergibt.

2. Maschine nach Anspruch 1, dadurch gekennzeichnet, daß die zumindestens eine mit dem Boden in Eingriff bringbare Kufe (19) an ihrem vorderen Ende schwenkbar an dem Bauteil (5) befestigt ist und daß die ersten und zweiten Haltearme (27, 31) allgemein in der Nähe des gegenüberliegenden Endes der Kufe (19) vorgesehen sind.

3. Maschine nach Anspruch 2, dadurch gekennzeichnet, daß die ersten und zweiten Schlitze (29, 32) von ähnlicher Form sind, wobei der zweite Schlitz (32) als Spiegelbild und unter einem Winkel gegenüber dem ersten Schlitz (29) ausgerichtet ist und wobei die Endteile (29″, 32″) übereinander liegen, wenn sich die Kufe (19) in der normalen und ausgefahrenen Betriebsstellung befindet.

4. Maschine nach Anspruch 3, dadurch gekennzeichnet, daß die Schlitze (29, 32) zweischenklig sind und allgemein die Form der Zahl Sieben aufweisen, wobei ihre längeren Schenkel (29′, 32′) unter dem genannten Winkel relativ zueinander ausgerichtet sind, während die kürzeren Schenkel (29″, 32″) so ausgerichtet sind, daß sie übereinander liegen, wenn sich die Kufe (19) in der normalen Betriebsstellung befindet, und wobei der Bolzen (34) mit den Enden der kürzeren Schenkel (29″, 32″) der jeweiligen Schlitze (29, 32) in der normalen Betriebsstellung in Eingriff kommt und automatisch die Kufe (19) in dieser Position verriegelt, so daß die kürzeren Schenkel (29″, 32″) und der Bolzen (34) somit die Verriegelungseinrichtungen bilden.

5. Maschine nach Anspruch 3 oder 4, dadurch gekennzeichnet, daß der oder jede erste Haltearm (27) zwei mit Abstand voneinander angeordnete allgemein parallele Platten umfaßt, die jeweils mit dem ersten Schlitz (29) ausgebildet sind, und daß der oder jeder zweite Haltearm (31) ebenfalls zwei mit Abstand voneinander angeordnete allgemein parallele Platten umfaßt, die so angeordnet sind, daß sie zwischen sich die Platten eines ersten Haltearms (27) aufnehmen und jeweils mit dem zweiten Schlitz (32) ausgebildet sind.

6. Maschine nach einem der vorhergehenden Ansprüche, dadurch gekennzeichnet, daß die Armteile (35, 36) schwenkbar mit ihrem anderen Ende an der Basiseinheit (1) über eine Totgangverbindung (38, 41) verbunden sind, so daß kleine allgemein vertikale Bewegung des Bauteils (5), die sich aus dem Nachführen auf dem Bodenumriß ergeben, aufgenommen werden, ohne daß die oder jede Kufe (19) gegenüber dem Bauteil (5) bewegt wird, daß jedoch, wenn das ßauteil (5) in seine Transportposition angehoben wird, die Armteile (35, 36) gezogen werden, so daß der zugehörige Bolzen (34) entlang der ersten und zweiten Schlitze (29, 32) bewegt wird, um die oder jede Kufe (19) gegenüber dem Bauteil (5) zurückzuziehen.

7. Maschine nach Anspruch 6, dadurch gekennzeichnet, daß das oder jedes Armteil (35, 36) zwei Arme umfaßt, die mit jeweiligen Enden des zugehörigen Bolzens (34) verbunden sind, wobei ein Arm (36) in Richtung auf den anderen Arm (35) gekröpft und an diesem befestigt ist.

8. Maschine nach einem der vorhergehenden Ansprüche, dadurch gekennzeichnet, daß die oder jede Kufe (19) mit einer Zugfeder (43) versehen ist, die auf den zugehörigen Bolzen (34) wirkt und betätigbar ist, um eine Rückführbewegung des Bolzens (34) entlang der ersten und zweiten Schlitze (29, 32) hervorzurufen, wenn das Bauteil (5) abgesenkt wird, um auf diese Weise die Kufe (19) erneut in die Betriebsstellung zu bringen.

9. Maschine nach Anspruch 5 oder einem der Ansprüche 6 bis 8 unter Rückbeziehtung auf Anspruch 5, dadurch gekennzeichnet, daß der oder jeder erste Haltearm (27) eine weitere Platte (28) umfaßt, die die beiden mit Abstand voneinander angeordneten Platten miteinander verbindet und die mit einer Anzahl von Öffnungen (30) versehen ist, und daß die oder jede Kufe (19) mit einem aufrechtstehenden Steg (24) ausgebildet ist, der ebenfalls mit einer Anzahl von Öffnungen (25) versehen ist, wobei die oder jede Kufe (19) einstellbar an dem zugehörigen ersten Haltearm (27) mit Hilfe von Schrauben befestigt ist, die durch ausgewählte Öffnungen (25, 30) in der weiteren Platte (28) und dem Steg (24) hindurchlaufen und wobei diese Öffnungen (25, 30) so ausgewählt sind, daß die erforderliche Arbeitshöhe des Bauteils (5) eingestellt ist.

10. Maschine nach Anspruch 9, dadurch gekennzeichnet, daß sich eine oder jede weitere Platte (28) nach oben über die Oberkanten der zugehörigen parallelen Platten (27) erstreckt und so gebogen ist, daß sie einen sich nach vorne und nach unten erstreckenden Teil (28') bildet.

## Revendications

1. Machine agricole comportant:
— un ensemble de base (1);
— un organe (5) monté sur l'ensemble de base (1) en vue de se déplacer par rapport à celui-ci entre une position de transport relevée et une position active abaissée;
— au moins un patin (19) apte à venir en contact avec le sol, mobile entre des positions rétractée et détendue par rapport à l'organe (5) et pourvu d'une première patte (27) en vue d'un assemblage fonctionnel avec une seconde patte (31) prévue sur l'organe (5); et
— des moyens formant bras (35, 36) qui accouplement d'une manière fonctionnelle le patin (19) avec l'ensemble de base (1) en vue de rétracter automatiquement ledit patin (19) par rapport à l'organe (5) lors du levage dudit organe (5), afin qu'une position de transport voulue soit atteinte; caractérisée en ce que:
— les première et seconde pattes (27, 31) comportent au moins une première (29) et au moins une seconde (32) fente allongée, les première et seconde fentes (29, 32) s'écartant sensiblement l'une de l'autre;
— la ou chaque première patte (27) est accouplée avec une seconde patte (31) associée à l'aide d'une goupille (34) qui traverse les deux fentes (29, 32), l'agencement étant tel que, lorsque le patin (19) se trouve dans sa position active normale et détendue, ladite goupille (34) vient en prise avec des parties d'extrémité (29″, 32″) des deux fentes (29, 32), lesdites parties d'extrémité (29″, 32″) des deux fentes (29, 32), lesdites parties d'extrémité (29″, 32″) étant orientées sensiblement perpendiculairement par rapport à la direction de la charge exercée sur la goupille (34) par le patin (19) en contact avec la surface du sol, si bien que ladite goupille (34) ainsi que lesdites parties d'extrémité (29″, 32″) forment effectivement un moyen de blocage destiné à bloquer automatiquement le patin (19) dans ladite position active par rapport à l'organe (5); et en ce que
— l'accouplement fonctionnel du patin (19) avec l'ensemble de base (1) à l'aide des moyens formant bras (35, 36) est réalisé en partie par un accouplement des moyens formant bras (35, 36), au niveau de l'une de leurs extrémités, avec la goupille (34), les moyens formant bras (35, 36) pouvant agir pour, lorsque l'organe (5) est relevé, solliciter la goupille (34) depuis le parties d'extrémité (29″, 32″) le long des fentes (29, 32), afin d'assurer un déblocage automatique et un retrait automatique du patin (19) par rapport à l'organe (5).

2. Machine selon la revendication 1, caractérisée en ce que le patin (19) apte à venir en contact avec le sol est, au niveau de son extrémité avant, fixé à pivotement à l'organe (5), tandis que les première et seconde pattes (27, 31) sont prévues sensiblement à proximité de l'extrémité opposée dudit patin (19).

3. Machine selon la revendication 2, caractérisée en ce que les première et seconde fentes (29, 32) ont une forme similaire, la seconde fente (32) étant orientée en image symétrique suivant un angle par rapport à la première fente (29) et les parties d'extrémité (29″, 32″) se chevauchant mutuellement lorsque le patin (19) se trouve dans la position active normale et détendue.

4. Machine selon la revendication 3, caractérisé en ce que le fentes (29, 32) sont à deux branches et présentent, dans l'ensemble, des configurations en forme de chiffres sept dont les branches le plus longues (29', 32') sont orientées suivant ledit angle l'une par rapport à l'autre et dont les branches les plus courtes (29″, 32″) sont orientées de manière à se chevaucher mutuellement lorsque le patin (19) se trouve dans la position active normale, tandis que la goupille (34) vient en prise avec les extrémités des branches les plus courtes (29″, 32″) des fentes (29, 32) respectives dans ladite position active normale pour bloquer automatiquement le patin (19) dans cette position, les branches les plus courtes (29″, 32″) et la goupille (34) formant ainsi ledit moyen de blocage.

5. Machine selon la revendication 3 ou 4, caractérisée en ce que la ou chaque première patte (27) comprend deux plaques mutuellement espacées et sensiblement parallèles qui comportent chacune ladite première fente (29), et en ce que la ou chaque seconde patte (31) comprend également deux plaques mutuellement espacées et sensiblement parallèles, disposées pour recevoir entre elles les plaques d'une première patte de montage (27) et comportant chacune ladite seconde fente (32).

6. Machine selon l'une quelconque des revendications précédentes, caractérisée en ce que les moyens formant bras (35, 36) sont, au niveau de leur autre extrémité, fixés à pivotement à l'ensemble de base (1) par l'intermédiaire d'un assemblage à déplacement libre (38, 41), moyennant quoi de faibles mouvements sensiblement verticaux de l'organe (5), dûs au suivi des contours du sol sont absorbés sans déplacement du ou des patin(s) (19) par rapport à l'organe (5), mais, lorsque ledit organe (5) est relevé dans sa position de transport, les moyens formant bras (35, 36) sont tirés pour ainsi déplacer la goupille (34) associée le long desdites première et seconde fentes (29, 32), afin de rétracter le ou les patin(s) (19) par rapport audit organe (5).

7. Machine selon la revendication 6, caractérisée en ce que le ou chaque moyen formant bras (35, 36) comprend deux bras reliés à des extrémités respectives de la goupille (34) associée, l'un des bras (36) étant coudé en direction de l'autre bras (35) et assujetti à celui-ci.

8. Machine selon l'une quelconque des revendications précédentes, caractérisée en ce que le ou chaque patin (19) est pourvu d'un ressort de tension (43) qui agit sur la goupille (34) associée et peut opérer pour assurer un mouvement en retour de ladite goupille (34) le long des première et seconde fentes (29, 32), lorsque ledit organe (5) est abaissé, afin de replacer le patin (19) dans la position active.

9. Machine selon la revendication 5 ou l'une quelconque des revendications 6 à 8 lorsqu'elles sont rattachées à la revendication 5, caractérisée en ce que la ou chaque première patte (27) comprend une autre plaque (28) qui relie entre elles les deux plaques espacées et présente plusieurs orifices (30), et en ce que le ou chaque patin (19) comporte une nervure montante (24) qui présente elle aussi plusieurs orifices (25), tandis que le ou chaque patin (19) est fixé d'une manière réglable à la première patte (27) associée à l'aide de boulons passant par des orifices (25, 30) sélectionnés de l'autre plaque (28) et de la nervure (24), les orifices (25, 30) étant choisis pour ajuster la hauter de travail requise de l'organe (5).

10. Machine selon la revendication 9, caractérisée en ce que l'autre ou chaque autre plaque (28) s'étend vers le haut au-delà des bords supérieurs des plaques parallèles (27) associées et est rabattue pour définir une partie (28') qui s'étend vers l'avant et vers le bas.

FIG.1

FIG.2

FIG.3

0 120 531

FIG.5

FIG.4

4